# EUROPEAN PATENT APPLICATION

(11) **EP 4 813 496 A1**
(43) Date of publication of application: **30.09.2026**
(21) Application number: 25166125.2
(22) Date of filing: 25.03.2025
(51) Int. Cl.: B01D 46/24, B01D 46/54

(54) **COMBINED BREATHER AND VENT UNIT FOR A BATTERY HOUSING**

(71) Applicant: Volvo Truck Corporation, 405 08 Göteborg (SE)
(72) Inventor: MOVAGHAR, Amirreza, 412 76 GÖTEBORG (SE); IRANNEZHAD, Mike, 413 30 GÖTEBORG (SE)
(74) Representative: Kransell & Wennborg KB

(57) **Abstract**

A vent unit (100) for an energy storage system (200), the vent unit comprising: a particle trapping system configured to function as a breather unit during normal operation and as a particle-trapping unit during a thermal runaway event, the particle trapping system comprising an inflatable multi-layer inner membrane (102a-c) configured to filter gas-borne particles during a thermal runaway event, and an inflatable gas-permeable outer membrane (104), configured to allow breathing and the release of filtered gases.

## Description

### TECHNICAL FIELD

The disclosure relates generally to a battery housing for vehicles. In particular aspects, the disclosure relates to a battery pack comprising a combined breather and vent unit for venting heated gas and particles during thermal runaway event. The disclosure can be applied to heavy-duty vehicles, such as trucks, buses, and construction equipment, among other vehicle types. The disclosure can be applied to marine vessels and the like. Although the disclosure may be described with respect to a particular vehicle, the disclosure is not restricted to any particular vehicle.

### BACKGROUND

Thermal runaway in battery packs for vehicles refers to a chain reaction of escalating heat generation within the battery cells. This process can be triggered by factors like overcharging, internal short circuits, or physical damage. As the temperature rises, it can lead to a self-perpetuating cycle, causing cells to heat up rapidly, potentially leading to gas release, fire, or even explosion. Managing this runaway reaction is critical to prevent severe damage to the battery pack, vehicle, and surrounding environment.

Conventional venting solutions typically include pressure relief valves, flame arrestors, and passive filtration systems designed to mitigate the effects of gas buildup during thermal events. While these systems help manage pressure fluctuations, they may struggle to efficiently capture fine particles or adapt to varying gas flow rates. Additionally, space constraints in battery pack designs demand compact yet highly effective solutions that ensure reliable operation under normal conditions while providing rapid response in the event of thermal runaway.

### SUMMARY

According to a first aspect of the disclosure, it is provided a vent unit for an energy storage system, the vent unit comprising: a particle trapping system configured to function as a breather unit during normal operation and as a particle-trapping unit during a thermal runaway event, the particle trapping system comprising an inflatable multi-layer inner membrane configured to filter gas-borne particles during a thermal runaway event, and an inflatable gas-permeable outer membrane, configured to allow breathing and the release of filtered gases.

The first aspect of the disclosure may seek to provide a vent unit for an energy storage system that enables controlled gas release while preventing the escape of harmful particles during a thermal runaway event. A technical benefit may include the ability to function as a breather unit under normal operating conditions, ensuring proper ventilation, while transitioning into a particle-trapping unit when a thermal runaway occurs. This design may improve safety by reducing the risk of hazardous emissions escaping the battery pack, thereby minimizing fire and explosion risks. Additionally, the inflatable structure of the membranes may allow for an adaptive response to pressure changes, optimizing gas flow management without requiring bulky or rigid filtration components.

Optionally, in some examples, including in at least one preferred example, the multi-layer inner membrane comprises filter layers with progressively decreasing pore sizes from an inner layer to an outer layer. A technical benefit may include enhanced filtration efficiency by enabling sequential particle capture, where larger particles are trapped in the inner layers and progressively smaller particles are captured in the outer layers. An inner layer is here seen as a layer closer to the interior of a battery housing and the battery cells, and an outer layer is thereby a layer closer to an exterior of the battery housing holding the batter cells. This may reduce clogging, maintain airflow efficiency, and improve overall particle retention during a thermal runaway event.

Optionally, in some examples, including in at least one preferred example, the gas-permeable outer membrane is configured to allow the passage of gases while preventing particles larger than a predetermined threshold from escaping. A technical benefit may include maintaining effective ventilation while ensuring that harmful particles do not exit the vent unit, thereby improving the containment of hazardous materials and enhancing safety by reducing the risk of secondary ignition or contamination.

Optionally, in some examples, including in at least one preferred example, the multi-layer inner membrane and the gas-permeable outer membrane are composed of a fire-resistant material. A technical benefit may include increased thermal durability, allowing the vent unit to withstand high temperatures associated with thermal runaway events. This may prevent structural degradation of the membranes and ensure continued functionality under extreme conditions.

Optionally, in some examples, including in at least one preferred example, the multi-layer inner membrane and the gas-permeable outer membrane are composed of a fire-resistant material configured to withstand a temperature of at least 700°C. A technical benefit may include further ensuring the integrity of the vent unit during severe thermal events by preventing melting, combustion, or mechanical failure of the membranes.

Optionally, in some examples, including in at least one preferred example, the multi-layer inner membrane comprises materials selected from the group comprising Silica Fiber Fabric, Basalt Fiber Fabric, and Woven Ceramic Fiber Fabric. A technical benefit may include improved high-temperature performance, flexibility, and mechanical strength, allowing the vent unit to operate effectively under extreme conditions while maintaining its particle-trapping function.

Optionally, in some examples, including in at least one preferred example, the membrane layers are configured to be foldable. A technical benefit may include compact storage and deployment efficiency, allowing the membranes to remain unobtrusive during normal operation and expand only when needed, thereby optimizing space usage and reducing unnecessary material stress.

Optionally, in some examples, including in at least one preferred example, the gas-permeable outer membrane is made of a breather material with a pore size of approximately 1-10 µm. A technical benefit may include controlled gas permeability, enabling efficient pressure equalization while ensuring that only sufficiently filtered gases escape the vent unit.

Optionally, in some examples, including in at least one preferred example, the gas-permeable outer membrane comprises a water-resistant material such as expanded polytetrafluoroethylene (ePTFE), such as Gore-Tex. A technical benefit may include protection against moisture ingress, which may prevent condensation-related issues such as particle clogging or degradation of filter performance, ensuring long-term reliability. The gas-permeable outer membrane may also comprise a waterproof and breathable material.

Optionally, in some examples, including in at least one preferred example, the multi-layer inner membrane includes filter layers with progressively decreasing pore sizes from approximately 2 mm in the innermost layer to approximately 0.1 mm in the outermost layer, enabling sequential particle capture. A technical benefit may include improved filtration precision by enabling a staged approach to capturing particles of different sizes, reducing the likelihood of filter saturation and maintaining airflow efficiency. The pore sizes of the inner membranes may also be tailored to suit the battery cell chemistry for a particular implementation.

Optionally, in some examples, including in at least one preferred example, the multi-layer inner membrane is folded during normal operation and inflates during a thermal runaway event. A technical benefit may include minimizing the space required for the vent unit under normal conditions while ensuring rapid and effective deployment of the filtration system when needed, thus optimizing both performance and packaging constraints.

Optionally, in some examples, including in at least one preferred example, an inflated volume of the gas-permeable outer membrane is larger than an inflated volume of the multi-layer inner membrane. A technical benefit may include that the outer membrane can inflate along with the inner membranes while maintaining a filtering functionality for particle retention.

Optionally, in some examples, including in at least one preferred example, an inflated volume of a layer of the multi-layer inner membrane increases for each layer in a direction away from an inlet of the vent unit. A technical benefit may include optimizing filtration efficiency by ensuring that larger filtration volumes are available for later filtration stages, reducing clogging risks and improving overall flow dynamics. Moreover, the successive filter layers are allowed to expand fully without being hindered by an outer layer.

Optionally, in some examples, including in at least one preferred example, the multi-layer inner membrane and the gas-permeable outer membrane are enclosed within a housing configured to attach to an energy storage system. A technical benefit may include improved integration and mechanical stability, ensuring that the vent unit remains securely positioned while allowing for modular or interchangeable designs suitable for different energy storage configurations.

Optionally, in some examples, including in at least one preferred example, the vent unit further comprises a pressure- or temperature-activated material, configured to forcefully inflate the multi-layer inner membrane. A technical benefit may include ensuring rapid deployment of the filtration system in response to critical thermal conditions, thereby enhancing reaction time and effectiveness in containing hazardous emissions.

Optionally, in some examples, including in at least one preferred example, the multi-layer inner membrane includes an active inflation mechanism, selected from the group comprising compressed gas canisters, pyrotechnic inflators, mechanical springs, and electrically driven pumps, the active inflation mechanism being configured to provide rapid inflation of the membranes during a thermal runaway event. A technical benefit may include enabling a controlled and reliable inflation process, ensuring that the filtration system is fully deployed in a timely manner to maximize particle containment and gas release management.

Optionally, in some examples, including in at least one preferred example, the vent unit further comprises a sensor element configured to monitor pressure, temperature, or gas composition within the vent unit, wherein the sensor element is configured to trigger the active inflation mechanism to inflate the multi-layer inner membrane during a thermal runaway event. A technical benefit may include enabling intelligent activation of the venting system, allowing for real-time monitoring and adaptive response to evolving conditions within the energy storage system. This may improve overall safety and operational efficiency.

According to a second aspect of the disclosure, it is provided an energy storage system comprising: a battery housing: a plurality of battery cells; a vent channel having a vent outlet at an outer wall of the battery housing; and a vent unit according to any one of the preceding claims arranged at the vent outlet to receive gas and particles from the vent channel during a thermal runaway event. A technical benefit may include providing a dedicated gas management system that directs high-temperature gases and particles safely away from the battery cells while ensuring controlled filtration before release. By integrating the vent unit at the vent outlet, the system may improve thermal event containment, reducing the likelihood of pressure buildup inside the battery housing and preventing uncontrolled emissions. This configuration may also facilitate modular battery designs, allowing the venting system to be standardized across different battery pack configurations without major structural modifications.

Optionally, in some examples, including in at least one preferred example, the inflation of the multi-layer inner membrane is configured to occur outside of battery housing. A technical benefit may include maximizing the available volume for inflation by allowing the vent membranes to expand outside the constrained space of the battery pack. This may reduce internal pressure buildup and improve venting efficiency by utilizing external space for gas dispersion and additional volume for inflation. One possible implementation includes an opening in the battery housing through which the membrane can inflate outward, ensuring that the filtration mechanism operates without obstructing internal battery components. This approach may also prevent secondary damage to battery cells by avoiding direct contact between the inflating membrane and other internal structures. Additionally, external inflation may allow for more effective cooling of the released gases, further mitigating fire risks and improving overall system safety.

There is also provided a vehicle comprising a vent unit and/or a battery housing according to any of the previously described examples. A technical benefit may include enhanced safety and reliability of the vehicle's energy storage system by ensuring controlled venting and particle containment during a thermal runaway event. The system may effectively manage high-temperature gases, reducing fire risks and preventing damage to surrounding components. Additionally, the adaptive inflation mechanism may optimize space utilization while maintaining venting efficiency, improving durability, regulatory compliance, and overall vehicle performance.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1A** is a cross section view of an exemplary vent unit according to an example.
**Fig. 1B** is a cross section view of an exemplary vent unit in an inflated state according to an example.
**Fig. 2** is a top-view of an exemplary energy storage system according to an example.
**Fig. 3** is a cross section view of an exemplary vent unit according to an example.
**Fig. 4** is a vehicle comprising an exemplary energy storage system according to an example.

### DETAILED DESCRIPTION

The detailed description set forth below provides information and examples of the disclosed technology with sufficient detail to enable those skilled in the art to practice the disclosure.

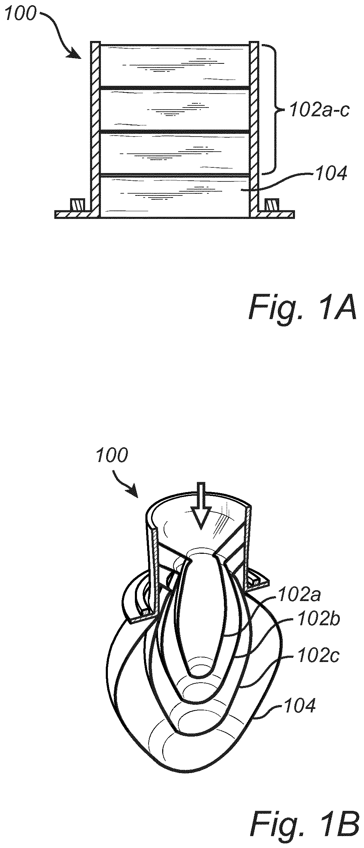

Referring to Fig. 1A, a vent unit 100 for an energy storage system 200 is illustrated in a cross-sectional view, showing the vent unit 100 in its normal operating state. The vent unit 100 comprises a particle trapping system configured to function as a breather unit during normal operation and as a particle-trapping unit during a thermal runaway event. The particle trapping system includes an inflatable multi-layer inner membrane 102a-c and an inflatable gas-permeable outer membrane 104.

The multi-layer inner membrane 102a-c consists of multiple layers 102a, 102b, 102c, each forming a filter membrane that remains in a un-inflated state during normal operation, allowing the vent unit 100 to function as a breather unit. The gas-permeable outer membrane 104 is positioned around the inner membrane 102a-c and enables controlled gas exchange during normal operation.

During a thermal runaway event, as illustrated in Fig. 1B, the multi-layer inner membrane 102a-c and the gas-permeable outer membrane 104 inflate in response to an increase in internal pressure and temperature. In this context, inflation refers to the expansion or unfolding of the membranes due to the force exerted by the escaping gases. The membranes may be elastic, allowing them to stretch upon inflation, or inelastic, in which case they transition from a folded to an expanded configuration without stretching.

The inflation process of the multi-layer inner membrane 102a-c occurs in a controlled manner, with each layer inflating sequentially. As the first layer 102a expands, the exhaust gas passes into the second layer 102b, which then inflates, followed by the third layer 102c. This multi-stage inflation enables progressive particle filtration, ensuring that larger particles are captured in the inner layers, while smaller particles are retained in the outer layers.

The gas-permeable outer membrane 104 allows the release of filtered gases while preventing particle escape. As the vent unit 100 transitions from a breather mode to a particle-trapping mode, the controlled expansion of the membranes optimizes gas flow, ensuring efficient venting while maintaining containment of hazardous materials.

The multi-layer inner membrane 102a-c comprises filter layers with progressively decreasing pore sizes from an inner side to an outer side. This arrangement enables a sequential filtration process in which larger particles are captured in the initial layers, while progressively smaller particles are retained in subsequent layers. By structuring the filtration in this manner, the risk of clogging is reduced, maintaining gas flow and ensuring effective particle containment throughout the inflation process. The specific pore size distribution can be optimized based on factors such as the expected particle size distribution during a thermal runaway event and the pressure conditions within the vent unit 100.

The gas-permeable outer membrane 104 is configured to allow the passage of gases while preventing particles larger than a predetermined threshold from escaping. This ensures that while venting occurs efficiently, solid combustion byproducts or hazardous particulate matter remain confined within the vent unit 100. The predetermined threshold may be defined based on safety requirements, ensuring that the expelled gases meet environmental and regulatory standards while maintaining effective pressure relief. For example, the gas-permeable outer membrane 104 can be made of a breather material with a pore size of approximately 1-10 µm, allowing it to effectively manage gas exchange while restricting particle emission. The selected pore size range ensures a balance between airflow and filtration efficiency, enabling the membrane to function as a controlled release barrier and to operate effectively as a breather during normal conditions while transitioning into a protective barrier when responding to a thermal runaway event.

Furthermore, the multi-layer inner membrane may include filter layers with progressively decreasing pore sizes from approximately 2 mm in the innermost layer to approximately 0.1 mm in the outermost layer, thereby enabling sequential particle capture.

The multi-layer inner membrane 102a-c and the gas-permeable outer membrane 104 may advantageously be composed of a fire-resistant material, ensuring that the vent unit 100 maintains structural integrity when exposed to high temperatures generated during a thermal runaway event. The fire-resistant properties of these membranes prevent combustion or degradation, allowing the vent unit 100 to continue functioning effectively under extreme conditions.

The fire-resistant material of the multi-layer inner membrane 102a-c and the gas-permeable outer membrane 104 may further be configured to withstand temperatures of at least 700°C. This ensures that the membranes remain intact and operational even when subjected to the elevated temperatures associated with exothermic reactions occurring within the energy storage system 200. The multi-layer inner membrane 102a-c may for example be composed of materials selected from the group comprising Silica Fiber Fabric, Basalt Fiber Fabric, and Woven Ceramic Fiber Fabric which offer high-temperature resistance while also providing the necessary flexibility for membrane deployment. The selection of materials can be optimized based on factors such as thermal stability, mechanical strength, and compatibility with the inflation mechanism of the vent unit 100. Moreover, the membrane layers may be configured to be foldable, allowing them to remain compact during normal operation and expand only when needed during a thermal runaway event. This foldability ensures efficient use of space within the vent unit 100 while facilitating controlled inflation.

According to an example, the gas-permeable outer membrane 104 comprises a water-resistant material such as expanded polytetrafluoroethylene (ePTFE), which provides protection against moisture ingress while maintaining controlled gas permeability. The water-resistant properties of the membrane prevent the accumulation of condensation or exposure to external humidity from compromising the vent unit 100 filtration performance. The outer membrane 104 may for example comprise ePTFE or similar water-resistant or waterproof materials allowing the gas-permeable outer membrane 104 to maintain airflow while repelling liquid infiltration, which is particularly beneficial in environments where the energy storage system 200 may be exposed to varying humidity levels or external contaminants.

During normal operation, the multi-layer inner membrane 102a-c remains in a folded state, allowing the vent unit 100 to function as a breather without obstructing airflow. When a thermal runaway event occurs, the increasing pressure and gas flow trigger the membrane to expand, unfolding or inflating to capture and filter gas-borne particles. This controlled expansion ensures an efficient transition from passive ventilation to active particle containment, maximizing filtration performance while maintaining effective gas release.

Each layer of the multi-layer inner membrane 102a-c may be designed to inflate progressively, with its volume increasing in a direction away from the inlet of the vent unit 100. This configuration enhances the staged filtration process, where each successive layer expand further than the previous one, thereby minimizes clogging risks and ensuring full inflation of each successive layer.

Enclosing the multi-layer inner membrane 102a-c and the gas-permeable outer membrane 104 within a housing provides mechanical stability and facilitates secure attachment to an energy storage system 200. The housing protects the membranes from external contaminants and mechanical damage while ensuring proper alignment for reliable operation.

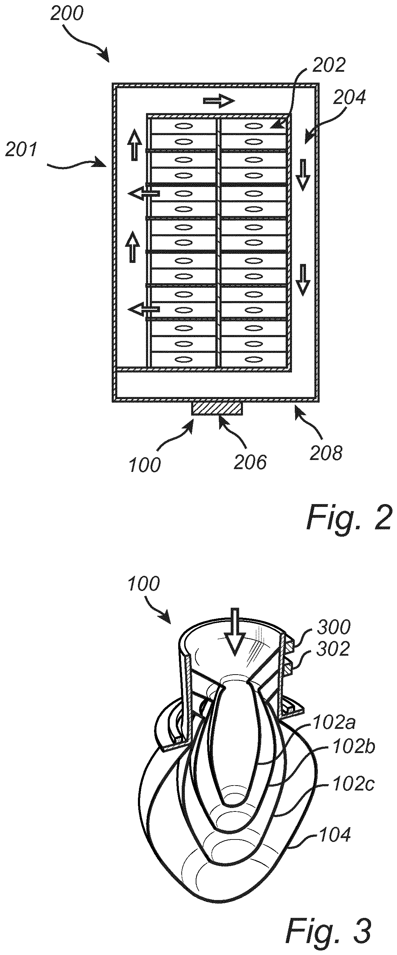

Fig. 2 illustrates an energy storage system 200 comprising a battery housing 201 containing a plurality of battery cells 202. A vent channel 204 extends within the battery housing 201 to direct gas and particles toward a vent outlet 206 positioned at an outer wall 208 of the battery housing. The vent unit 100 is arranged at the vent outlet 206, where it receives gas and particles expelled through the vent channel 204 during a thermal runaway event. This configuration allows the vent unit 100 to function as an interface between the internal battery environment and the external surroundings, ensuring controlled gas release while preventing hazardous particle escape.

As gases generated by the battery cells 202 travel through the vent channel 204, they are directed into the vent unit 100, where the multi-layer inner membrane 102a-c inflates and captures particulate matter. To optimize space utilization and improve venting efficiency, the multi-layer inner membrane 102a-c is configured to inflate outside of the battery housing 201. As shown in Fig. 2, an opening at the vent outlet 206 allows the membrane to expand outward, preventing interference with the internal components of the battery pack. This external inflation design ensures that the maximum available volume outside of the battery housing can be used for expansion and gas dispersion while minimizing constraints imposed by the compact structure of the battery housing 201.

Fig. 3 illustrates an exemplary vent unit 100 incorporating a pressure- or temperature-activated material that facilitates the forceful inflation of the multi-layer inner membrane 102a-c. This activation material is designed to respond to thermal or pressure changes within the vent unit 100, ensuring rapid deployment of the filtration system during a thermal runaway event. Upon reaching a predetermined activation threshold, the material expands or releases stored energy, initiating the inflation process of the multi-layer inner membrane 102a-c. By providing a controlled and forceful inflation mechanism, the vent unit 100 enhances gas and particle containment while minimizing the risk of uncontrolled venting.

To enact deployment, the vent unit 100 includes an active inflation mechanism 300, as shown in Fig. 3. This mechanism may utilize one or more inflation sources selected from the group comprising compressed gas canisters, pyrotechnic inflators, mechanical springs, and electrically driven pumps. Each of these components is configured to provide rapid inflation of the membranes in response to a detected thermal runaway event. For example, a compressed gas canister may release stored gas into the membrane chambers, expanding them within milliseconds, while a pyrotechnic inflator may generate high-pressure gas upon activation. The inclusion of an active inflation mechanism 300 ensures that the vent unit 100 transitions quickly from a passive breather state to an active particle-trapping system, improving the effectiveness of gas filtration and thermal event containment.

A sensor element 302 may further be integrated into the vent unit 100 to monitor critical parameters such as pressure, temperature, or gas composition. Th sensor element 302 may continuously track conditions within the vent unit 100 and is configured to trigger the active inflation mechanism 300 when a predefined threshold is exceeded. For instance, if the sensor element 302 detects a rapid temperature increase indicative of thermal runaway, it can send a signal to activate the selected inflation mechanism, ensuring immediate deployment of the multi-layer inner membrane 102a-c.

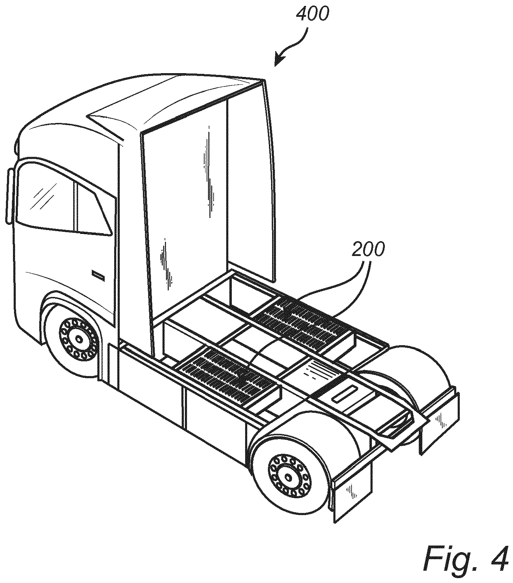

Fig. 4 schematically illustrates a vehicle 400 comprising an energy storage system 200, according to any of the described examples.

Example 1. A vent unit for an energy storage system, the vent unit comprising: a particle trapping system configured to function as a breather unit during normal operation and as a particle-trapping unit during a thermal runaway event, the particle trapping system comprising an inflatable multi-layer inner membrane configured to filter gas-borne particles during a thermal runaway event, and an inflatable gas-permeable outer membrane, configured to allow breathing and the release of filtered gases.

Example 2. The vent unit according to example 1, wherein the multi-layer inner membrane comprises filter layers with progressively decreasing pore sizes from an inner side to an outer side.

Example 3. The vent unit according to example 1 or 2, wherein the gas-permeable outer membrane is configured to allow the passage of gases while preventing particles larger than a predetermined threshold from escaping.

Example 4. The vent unit according to any of the preceding examples, wherein the multi-layer inner membrane and the gas-permeable outer membrane are composed of a fire-resistant material.

Example 5. The vent unit according to any of the preceding examples, wherein the multi-layer inner membrane and the gas-permeable outer membrane are composed of a fire-resistant material configured to withstand a temperature of at least 700°C.

Example 6. The vent unit according to any of the preceding examples, wherein the multi-layer inner membrane comprises materials selected from the group comprising Silica Fiber Fabric, Basalt Fiber Fabric, and Woven Ceramic Fiber Fabric.

Example 7. The vent unit according to any one of the preceding examples, wherein the membrane layers are configured to be foldable.

Example 8. The vent unit according to any of the preceding examples, wherein the gas-permeable outer membrane is made of a breather material with a pore size of approximately 1-10 µm.

Example 9. The vent unit according to any of the preceding examples, wherein the gas-permeable outer membrane comprises a water-resistant material such as expanded polytetrafluoroethylene.

Example 10. The vent unit according to any of the preceding examples, wherein the multi-layer inner membrane includes filter layers with progressively decreasing pore sizes from approximately 2 mm in the innermost layer to approximately 0.1 mm in the outermost layer, enabling sequential particle capture.

Example 11. The vent unit according to any of the preceding examples, wherein the multi-layer inner membrane is folded during normal operation and inflates during a thermal runaway event.

Example 12. The vent unit according to any of the preceding examples, wherein an inflated volume of the gas-permeable outer membrane is larger than an inflated volume of the multi-layer inner membrane.

Example 13. The vent unit according to any of the preceding examples, wherein an inflated volume of a layer of the multi-layer inner membrane increases for each layer in a direction away from an inlet of the vent unit.

Example 14. The vent unit according to any of the preceding examples, wherein the multi-layer inner membrane and the gas-permeable outer membrane are enclosed within a housing configured to attach to an energy storage system.

Example 15. The vent unit according to any of the preceding examples, further comprising a pressure- or temperature-activated material, configured to forcefully inflate the multi-layer inner membrane.

Example 16. The vent unit according to example 15, wherein the multi-layer inner membrane includes an active inflation mechanism, selected from the group comprising compressed gas canisters, pyrotechnic inflators, mechanical springs, and electrically driven pumps, the active inflation mechanism being configured to provide rapid inflation of the membranes during a thermal runaway event.

Example 17. The vent unit according to example 16 or 17, further comprising a sensor element configured to monitor pressure, temperature, or gas composition within the vent unit, wherein the sensor element is configured to trigger the active inflation mechanism to inflate the multi-layer inner membrane during a thermal runaway event.

Example 18. An energy storage system comprising: a battery housing: a plurality of battery cells; a vent channel having a vent outlet at an outer wall of the battery housing; and a vent unit according to any one of the preceding examples arranged at the vent outlet to receive gas and particles from the vent channel during a thermal runaway event.

Example 19. The battery housing according to example 18, wherein the inflation of the multi-layer inner membrane is configured to occur outside of battery housing.

Example 20. A vehicle comprising a battery housing according to example 18 or 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A vent unit (100) for an energy storage system (200), the vent unit comprising:
a particle trapping system configured to function as a breather unit during normal operation and as a particle-trapping unit during a thermal runaway event, the particle trapping system comprising an inflatable multi-layer inner membrane (102a-c) configured to filter gas-borne particles during a thermal runaway event, and an inflatable gas-permeable outer membrane (104), configured to allow breathing and the release of filtered gases.

2. The vent unit according to claim 1, wherein the multi-layer inner membrane comprises filter layers with progressively decreasing pore sizes from an inner layer to an outer layer.

3. The vent unit according to claim 1 or 2, wherein the gas-permeable outer membrane is configured to allow the passage of gases while preventing particles larger than a predetermined threshold from escaping.

4. The vent unit according to any of the preceding claims, wherein the multi-layer inner membrane and the gas-permeable outer membrane are composed of a fire-resistant material.

5. The vent unit according to any of the preceding claims, wherein the multi-layer inner membrane and the gas-permeable outer membrane are composed of a fire-resistant material configured to withstand a temperature of at least 700°C.

6. The vent unit according to any of the preceding claims, wherein the multi-layer inner membrane comprises materials selected from the group comprising Silica Fiber Fabric, Basalt Fiber Fabric, and Woven Ceramic Fiber Fabric.

7. The vent unit according to any one of the preceding claims, wherein the membrane layers are configured to be foldable.

8. The vent unit according to any of the preceding claims, wherein the gas-permeable outer membrane is made of a breather material with a pore size of approximately 1-10 µm.

9. The vent unit according to any of the preceding claims, wherein the gas-permeable outer membrane comprises a water-resistant material such as expanded polytetrafluoroethylene (ePTFE).

10. The vent unit according to any of the preceding claims, further comprising a pressure- or temperature-activated material, configured to forcefully inflate the multi-layer inner membrane.

11. The vent unit according to claim 10, wherein the multi-layer inner membrane includes an active inflation mechanism (300), selected from the group comprising compressed gas canisters, pyrotechnic inflators, mechanical springs, and electrically driven pumps, the active inflation mechanism being configured to provide rapid inflation of the membranes during a thermal runaway event.

12. The vent unit according to claim 10 or 11, further comprising a sensor element (302) configured to monitor pressure, temperature, or gas composition within the vent unit, wherein the sensor element is configured to trigger the active inflation mechanism to inflate the multi-layer inner membrane during a thermal runaway event.

13. An energy storage system (200) comprising:
a battery housing (201)
a plurality of battery cells (202);
a vent channel (204) having a vent outlet (206) at an outer wall (208) of the battery housing; and
a vent unit (100) according to any one of the preceding claims arranged at the vent outlet to receive gas and particles from the vent channel during a thermal runaway event.

14. The battery housing according to claim 13, wherein the inflation of the multi-layer inner membrane is configured to occur outside of battery housing.

15. A vehicle (400) comprising a battery housing (200) according to any claim 13 or 14.
